# EUROPEAN PATENT APPLICATION

(11) **EP 4 576 743 A1**
(43) Date of publication of application: **25.06.2025**
(21) Application number: 22969332.0
(22) Date of filing: 23.12.2022
(51) Int. Cl.: H04L 67/563, H04L 67/51, H04W 88/14

(54) **DATA MANAGEMENT FUNCTION AND METHOD FOR OPERATION OF NETWORK FUNCTIONS**

(71) Applicant: Samsung Electronics Co., Ltd., Suwon-si, Gyeonggi-do 16677 (KR)
(72) Inventor: CHO, Sunwoo, Suwon-si, Gyeonggi-do 16677 (KR); CHOI, Jinho, Suwon-si, Gyeonggi-do 16677 (KR); KIM, Dongmyung, Suwon-si, Gyeonggi-do 16677 (KR); KIM, Sunhyun, Suwon-si, Gyeonggi-do 16677 (KR); CHA, Jiyoung, Suwon-si, Gyeonggi-do 16677 (KR)
(74) Representative: Nederlandsch Octrooibureau
(86) International application number: PCT/KR2022/021150
(87) International publication number: WO 2024/135898

(57) **Abstract**

The present disclosure relates to a 5G or 6G communication system for supporting higher data transmission rates. In addition, the present disclosure relates to a method performed by a first network function (NF), and an apparatus for performing same, the method including the steps of: determining a data proxy (DP) entity for a service with a second NF; generating a service message that does not include a part of data for the service; and transmitting the service message to the DP entity, wherein the part of data for the service is processed by the DP entity and is transmitted to the second NF.

## Description

### [Technical Field]

The disclosure relates to a data management function for operation of a network function (NF), and a method for operating same. In addition, the disclosure relates to a data management function for operating a stateless network function, and a method for operating the same.

### [Background Art]

A review of the development of wireless communication from generation to generation shows that the development has mostly been directed to technologies for services targeting humans, such as voice-based services, multimedia services, and data services. It is expected that connected devices which are exponentially increasing after commercialization of 5th-generation (5G) communication systems will be connected to communication networks. Examples of things connected to networks may include vehicles, robots, drones, home appliances, displays, smart sensors installed in various infrastructures, construction machines, factory equipment, and the like. Mobiles devices are expected to evolve into various form factors such as augmented reality glasses, virtual reality headsets, and hologram devices. In order to provide various services by connecting hundreds of billions of devices and things in the 6th-generation (6G) era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (1,000 giga)-level bps and a radio latency of 100 µ sec. That is, 6G communication systems will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance (that is, coverage) will become more crucial. It is necessary to develop, as major technologies for securing the coverage, multiantenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Specifically, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

### [Disclosure]

### [Technical Problem]

A technical problem to be solved in an embodiment of disclosure is to provide an efficient data management function for operation of a stateless network function, and a method for operating the same.

In addition, another technical problem to be solved in an embodiment of the disclosure is to provide a method for reducing the number of times of additional signaling occurring for a data-related operation such as data acquisition, storage, or the like, and reducing overhead and transmission latency caused by the signaling in a core network environment including a stateless NF.

In addition, another technical problem to be solved in an embodiment of the disclosure is to support a function of adding required data to a message while mediating between a service message exchanged between NFs, or storing data included in the message in a storage is supported without performing separate signaling for the data-related operation.

### [Technical Solution]

An embodiment of the disclosure to solve the above-mentioned problems may provide a method performed by a first network function (NF), the method including determining a data proxy (DP) entity for a service with a second NF, generating a service message not including a part of data for the service, and transmitting the service message to the DP entity, wherein the part of data for the service is processed by the DP entity and is transmitted to the second NF.

In addition, an embodiment of the disclosure may provide a method performed by a data proxy (DP), the method including receiving, from a first network function (NF), a service message not including a part of data for a service for a second NF, processing, based on a data processing type included in the service message, the part of data for the second NF, and transmitting a service message including the part of data to the second NF

In addition, an embodiment of the disclosure may provide a first network function (NF) including a transceiver and a controller, wherein the controller is configured to determine a data proxy (DP) entity for a service with a second NF, generate a service message not including a part of data for the service, and transmit the service message to the DP entity, wherein the part of data for the service is processed by the DP entity and transferred to the second NF.

In addition, an embodiment of the disclosure may provide a data proxy (DP) entity including a transceiver and a controller, wherein the controller is configured to receive, from a first network function (NF), a service message not including a part of data for a service for a second NF, process, based on a data processing type included in the service message, the part of data for the second NF, and transmit a service message including the part of data to the second NF.

Advantageous effects obtainable from the disclosure may not be limited to the above-mentioned effects, and other effects which are not mentioned may be clearly understood, through the following descriptions, by those skilled in the art to which the disclosure pertains.

### [Advantageous Effects]

According the technical problems to be solved in the embodiments of the disclosure, an efficient data management function for operation of a stateless network function and a method for operating the same can be provided.

In addition, according to various embodiments of the disclosure, unlike the existing technology in which a stateless core NF requires to perform additional data-related signaling, separately from service-related signaling, if a data proxy (DP) proposed in the disclosure is used, it is possible to include data-related signaling in service-related signaling and transmit the same, and thus the same service procedure can be performed through a significantly lower number of times of signaling compared to the existing technology. Accordingly, the latency and transmission overhead caused by additional signaling can be reduced, and complexity and dependency caused in case that each NF manages data can be reduced, and a DP entity is dedicated to perform a data-related function, whereby it is expected to have possibility that a specified data-related function can be provided later.

### [Description of Drawings]

FIG. 1 illustrates a system structure of a wireless communication system according to the disclosure.
FIG. 2 illustrates a stateful NF and a stateless NF according to an embodiment of the disclosure.
FIG. 3 illustrates a system including a stateless NF and a service processing process using the same according to an embodiment of the disclosure.
FIG. 4 illustrates a system including a DP entity and a stateless NF and a service processing process using the same according to an embodiment of the disclosure.
FIG. 5 illustrates a process of requesting data processing from a DP entity by a consumer NF and a producer NF of the disclosure.
FIG. 6 illustrates a process in which a consumer NF requests data processing from a DP entity and a producer NF does not request data processing from the DP entity according to an embodiment of the disclosure.
FIG. 7 illustrates a process in which a consumer NF does not request data processing from a DP entity and a producer NF requests data processing from the DP entity according to an embodiment of the disclosure.
FIG. 8 illustrates a process in which a consumer NF and a producer NF use different DPs to request data processing according to an embodiment of the disclosure.
FIG. 9 illustrates a header of a service message transmitted by an NF and DP storage applicable to various embodiments of the disclosure.
FIG. 10 illustrates a header of a service message transmitted by an NF and DP retrieve applicable to various embodiments of the disclosure.
FIG. 11 illustrates a header of a service message transmitted by an NF and a DP query applicable to various embodiments of the disclosure.
FIG. 12 illustrates a header of a service message transmitted by an NF and DP store and update applicable to various embodiments of the disclosure.
FIG. 13 illustrates a header of a service message transmitted by an NF and DP delete applicable to various embodiments of the disclosure.
FIG. 14 illustrates a structure of a network entity performing a network function according to an embodiment of the disclosure.

### [Mode for Invention]

In describing embodiments in the specification, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB". In the disclosure, the term "terminal" may refer to mobile phones, NB-IoT devices, sensors, and various wireless communication devices.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

Hereinafter, for convenience of description, for the entities that exchange information to control access and manage the state, the terms of NFs (e.g., AMF, SMF, NSSF, etc.) are used. However, the embodiments of the disclosure may be likewise applied even in case that the NF is actually implemented as an instance (e.g., an AMF instance, an SMF instance, an NSSF instance, etc.).

The disclosure may be applied to 3GPP NR (5th generation wireless communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

Furthermore, in the following description of embodiments of the disclosure, LTE, LTE-A, LTE Pro, or 5G (or NR, next-generation mobile communication) systems will be described by way of example, but the embodiments of the disclosure may also be applied to other communication systems having similar technical backgrounds or channel types to the embodiments of the disclosure. In addition, based on determinations by those skilled in the art, the disclosure may also be applied to other communication systems through some modifications without significantly departing from the scope of the disclosure.

In various embodiments of the disclosure, a service message may refer to, but not limited to, a service request message or a service response message.

In the following description of the disclosure, a detailed description of known functions or configurations incorporated herein will be omitted in case that it is determined that the description may make the subject matter of the disclosure unnecessarily unclear. Hereinafter, embodiments of the disclosure will be described with reference to the accompanying drawings.

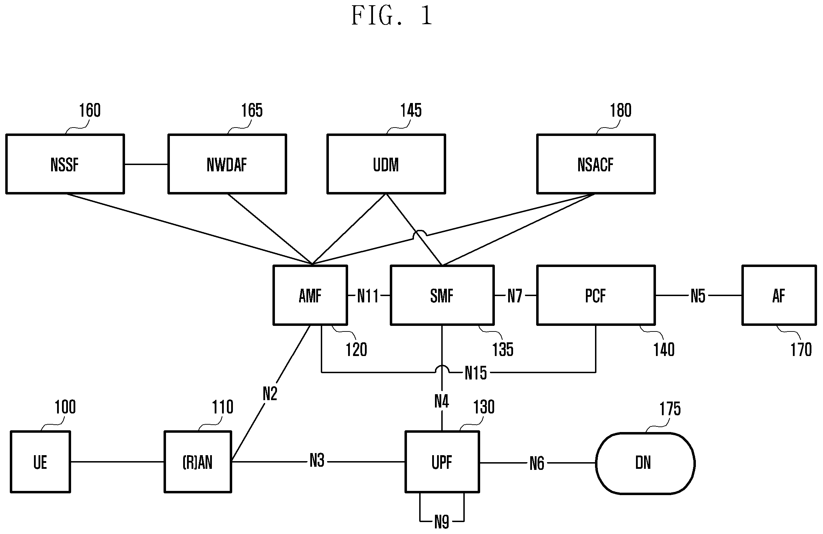

FIG. 1 illustrates a system structure of a wireless communication system (5GC) according to the disclosure. The 5GS may include a 5G core network, a base station 110, a UE 100, and the like. The 5G core network may include an AMF 120, an SMF 135, a UPF 130, a PCF 140, a UDM 145, an NSSF 160, an NWDAF 165, an AF 170, an NSACF 180, an N3F, and the like.

The UE 100 may access the 5G core network through a radio access network (RAN) base station 110 (hereinafter, referred to as a base station). The base station 110 may support a 3GPP access network type (e.g., NR, E-UTRA, etc.) or a non-3GPP access network type (e.g., Wi-Fi, etc.). The UE 100 may be connected over an N2 interface to the AMF 120 through the base station 110, and may be connected over the N3 interface to the UPF 130. The base station 110 may be referred to as another term having a technical meaning that is equivalent to that of a base station, such as an access point (AP), an eNodeB (eNB), a 5^{th} generation node (5G node), and a gNodeB (gNB). A non-3GPP function (N3F) is an NF that operates as terminations of the N2 interface and N3 interface towards the UE 100 accessing via a non-3GPP access network (e.g., Wi-Fi) that is not defined in 3GPP. The N3F may process N2 control plane signaling and N3 user plane packets.

The access and mobility management function (AMF) 120 is a network function (NF) for managing wireless network access and mobility of the UE. The session management function (SMF) 135 is an NF that manages a session for the UE, and the session information includes quality-of-service (QoS) information, charging information, and packet processing information. The user plane function (UPF) 130 is an NF that processes user traffic (e.g., user plane traffic), and is controlled by the SMF 135. The policy control function (PCF) 140 is an NF that manages operator policies for providing services in the wireless communication system. The user data management (UDM) 145 is an NF that stores and manages subscription information (e.g., a UE subscription) of the UE. A unified data repository (UDR) is an NF that stores and manages data. The UDR may store UE subscription information and provide UE subscription information to the UDM 145. In addition, the UDR may store operator policy information and provide operator policy information to the PCF 140. The network data analytics function (NWDAF) 165 is an NF that provides analysis information for the 5G system to operate. The NWDAF 165 may collect data from other NFs or operations, administration and maintenance (OAM) constituting the 5GS, analyze the collected data, and provide a result of the analysis to other NFs. A network slice admission control function (NSACF) 180 is an NF that monitors and controls the number of registered UEs and the number of sessions of a network slice that is a target of network slice admission control (NSAC). The NSACF 180 stores configuration information on a maximum number of registered UEs and a maximum number of sessions for each network slice.

Hereinafter, for convenience of description, entities that exchange information for access control and state management will be collectively described as an NF. However, embodiments of the disclosure may be equally applied even in case that an NF is actually implemented with an instance (e.g., an AMF instance, an SMF instance, an NSSF instance, or the like).

In the disclosure, an instance may indicate a state in which a specific NF exists in the form of a software code and can be executed on a physical computing system, e.g., a specific computing system existing on the core network to perform the function of the NF by using physical or/and logical resources allocated from the computing system. Accordingly, an AMF instance, SMF instance, and NSSF instance may use physical and/or logical resources allocated from a specific computing system existing on the core network for an AMF operation, an SMF operation, and an NSSF operation, respectively. As a result, the AMF instance, SMF instance, or NSSF instance, which uses physical or/and logical resources allocated from a specific computing system existing on the network for the AMF, SMF, or NSSF operation, may perform the same operation as in a case where an AMF, an SMF or an NSSF exists. Therefore, descriptions made using NFs (e.g., an AMF, an SMF, a UPF, an NSSF, an NRF, an SCP, and the like) or NF devices (e.g., an AMF device, an SMF device, a UPF device, an NSSF device, an NRF device, an SCP device, and the like) may be replaced with descriptions made using NF instances, or, conversely, descriptions made using NF instances may be replaced with descriptions made using NFs (or NF devices). Similarly, in an embodiment of the disclosure, descriptions using a network slice may be replaced with descriptions made using a network slice instance, or, conversely, descriptions made using a network slice instance may be replaced with descriptions made using a network slice.

According to an embodiment of the disclosure, in a 5GS defined by 3GPP, one network slice may be referred to as single-network slice selection assistance information (S-NSSAI). The S-NSSAI may include a slice/service type (SST) value and a slice differentiator (SD) value. The SST may indicate the characteristic of a service supported by the slice (e.g., eMBB, Internet of things (IoT), URLLC, V2X, or the like). The SD may be a value used as an additional identifier for a specific service referred to as an SST.

The NSSAI may include one or more S-NSSAIs. Examples of the NSSAI may include, but is not limited to, a configured NSSAI stored in the UE, a requested NSSAI requested by the UE, an allowed NSSAI allowed to be used by the UE and determined by an NE (e.g., an AMF, an NSSF, etc.) of the 5G core network, a subscribed NSSAI to which the UE is subscribed, or the like.

The UE 100 may be simultaneously connected to the base station 110 and registered in the 5G system. Specifically, the UE 100 may connect to the base station 110 to perform a UE registration procedure with the AMF 120. During the registration procedure, the AMF 120 may determine an allowed slice (e.g., allowed NSSAI) available to the UE connected to the base station 110 and allocate the same to the UE 100. The UE may select a specific slice to establish a PDU session for communication with an actual application server. One PDU session may include one or plural QoS flows, and plural QoS flows may configure different service qualities (QoS) parameters, respectively, to provide different transmission performances required for application services, respectively.

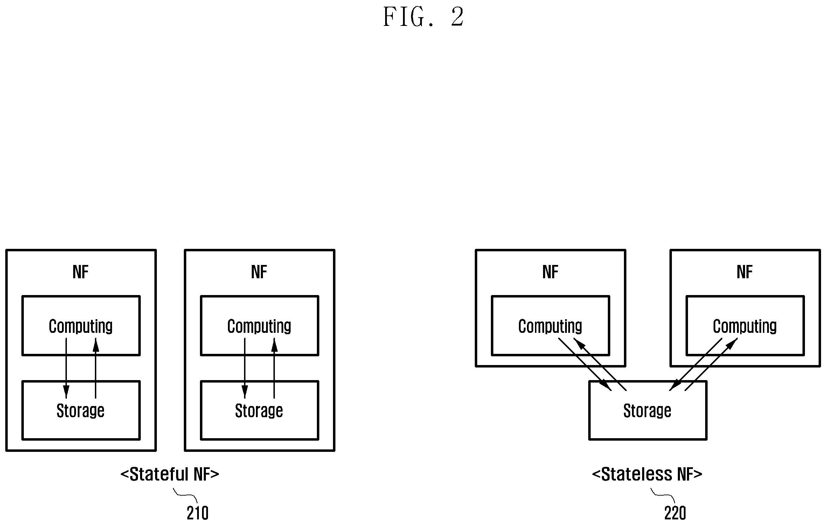

FIG. 2 illustrates a stateful NF and a stateless NF according to an embodiment of the disclosure.

Networks functions (NFs) constituting a core network in the 5G mobile communication system may be implemented in a stateful or stateless scheme.

A stateful NF 210 is an NF in the form of having a computing resource and a storage resource, and data (including UE context or session context) managed by each NF is stored in a storage resource within the corresponding NF. For example, a UE context of a specific UE is stored in an access and mobility management function (AMF) supporting the corresponding UE, and a session context is stored in a session management function (SMF) supporting the corresponding UE. In this case, the corresponding UE receives a service only from an NF having a context of the corresponding UE, and may thus have NF dependency. In case that an AMF storing the UE context cannot provide a service due to a situation such as overload, the UE cannot perform AMF handover until the corresponding AMF transfers the UE context to another AMF. To solve this problem, the necessity of a stateless NF 220 has arisen.

The stateless NF 220 is an NF having the form in which a storage resource and a computing resource are separated from each other and data managed by an NF having the computing resource only is stored in a separate remote storage. In the case of the stateless NF 220, the NF does not store the data, and thus in case that a specific NF cannot provide a service, another NF may provide the same service by obtaining data from the storage. However, for the stateless NF 220, a process of accessing the storage is always necessary to provide or request a service, which may cause overhead.

As an example of an NF serving as a data storage, a unified data repository (UDR) and an unstructured data storage function (UDSF) are defined in the 5G standard. The NF may store unstructured data in the UDSF and may thus be a stateless NF. In addition, in case that the NF is a unified data management (UDM), a policy control function (PCF), or a network exposure function (NEF), the NF may store data in the UDR and may thus be a stateless NF. In order for the stateless NF to request or provide a service, the stateless NF may access the UDSF or UDR corresponding to a remote storage in which data is stored and obtain data required for the corresponding service message, or a separate procedure of storing data obtained as a result of operation in the remote storage is required. In this case, the process of obtaining or storing the data is defined in the form of requesting a service provided by the UDSF or the UDR.

A service communication proxy (SCP) defined in the 5G standard takes a role of transferring a service message transparently transmitted by a consumer NF to a producer NF. In case that the consumer NF includes information required to discover a producer NF or an address of the producer NF in a service request message and transfers to the SCP, the SCP performs NR discovery of routing of the message.

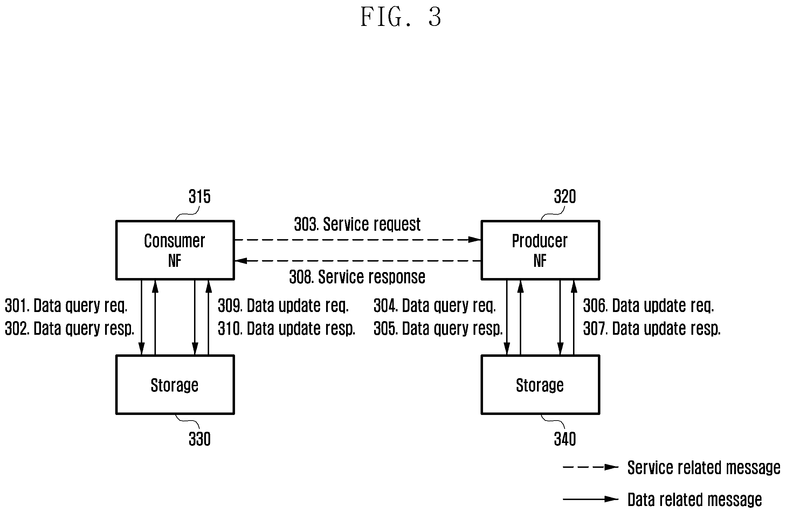

FIG. 3 illustrates a system including a stateless NF and a service processing process using the same according to an embodiment of the disclosure.

An NF (UDR or UDSF) serving as a data storage to support a stateless NF is defined, but data exchange with a corresponding storage function is defined in the form of a service provided by the NF, and thus a procedure in which the stateless NF generates a separate message for the purpose of obtaining or storing data and exchanges the same is required. For example, before transmitting a service request message to a producer NF 320, a consumer NF 315 needs to first perform a process 301 of generating a service request message (e.g., a data query request message) for obtaining data required to generate the service request message from a storage NF 330 and transmitting the same to the storage NF 330, and the storage NF 330 performs a process 302 of transmitting data required to generate the service request message to a consumer NF 315 through a service response message (e.g., data query response message). In addition, in chase that receiving the service request message from the consumer NF 315 (process 303), the producer NF 320 processes the received service request message and performs a process 304 of transmitting a service request message (e.g., a data query request message) for requesting data to the storage NF 340. The storage NF 340 needs to additionally perform operation 305 of transmitting a service response message (e.g., a data query response message) including requested data to the producer NF 320.

In addition, the producer NF may transmit, to the storage NF 340, a message for requesting to update information changed as a result of operation according the data obtained in operation 305 (operation 306), and may receive a message (e.g., a data update response message) including a result of the updating from the storage NF 340 (operation 307).

The producer NF 320 may transmit, based on the data obtained from the storage NF 340, a service response message to the consumer NF 315 (operation 308). The consumer NF 315 having received the service response message may transmit, to the storage NF 330, a message (e.g., a data update request message) for requesting to update (operation 309), and receive a message (e.g., a data update response message) including a result of the updating from the storage NF 330 (operation 310).

In the embodiment of FIG. 3, the SCP may perform a routing function of the message and NF discovery between the consumer NF 315 and the producer NF 320. The SCP defined in the embodiment of FIG. 3 takes a role of receiving a service request message from the consumer NF and transferring the same to the producer NF, but does not perform an operation of adding data to the corresponding service message or extracting and storing the data, etc.

In the example of FIG. 3, access to an external storage corresponds to information exchange between separate entities, latency and overhead of data transmission may occur. Accordingly, a service call and data management technique for obtaining or processing required data by the NF and reducing overhead is required.

The purpose of various embodiments of the disclosure described below is to reduce the number of times of additional signaling occurring for a data-related operation such as data acquisition, storage, or the like, and reducing overhead and transmission latency caused by the signaling in a core network environment including a stateless NF. A function of adding required data to a message while mediating between a service message exchanged between NFs, or storing data included in the message in a storage is supported without performing separate signaling for the data-related operation.

In various embodiments of the disclosure, the function of adding required data to a message while mediating between a service message exchanged between NFs, or storing data included in the message in a storage is defined as a data proxy (DP) function. In various embodiments of the disclosure, the DP is a network entity capable of simultaneously performing a data storage function and a proxy function. In the disclosure, the data storage function collectively means a data-related function such as receiving data from the NF and storing the same, transferring the stored data to the NF, or the like. In the disclosure, it is assumed that there is no limit to the type of an NF capable of accessing a DP entity and storing/changing data or obtaining the data and the type of data capable of storing the DP entity. In the disclosure, the proxy function means a function of utilizing information such as a target network function (NF) address and a service name, sent by a source NF, to invoke the target NF's service on its behalf and relay messages. The DP entity may communicate with other core NFs by using a service-based interface.

In the disclosure, the DP supports the following data processing functions supported by a data storage.
- Store: Receive new data from NF and store same in storage
- Update: Receive data from NF and modify existing data stored in storage
- Query: Transfer data stored in storage to NF
- Delete: Delete data stored in storage

In addition, in the disclosure, the proxy function is added to the DP and the DP may support the following data processing function.

Retrieve: Add service message generated by source NF and transfer same to target NF
- Store/Update: Store or update, in storage, data included in a service message and transferred from source NF, and then transfer service message to target NF
- Delete: Delete, from storage, data to be deleted, the data being included in service message and transferred from source NF, and then transfer service message to target NF

Various details of the DP entity described below are applicable to various embodiments of the disclosure.

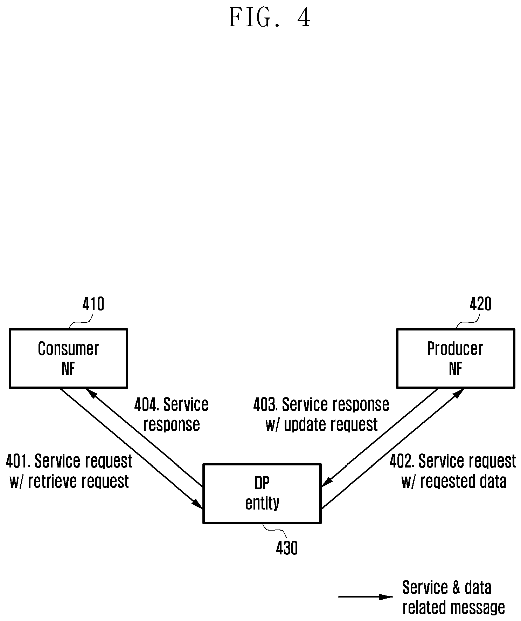

FIG. 4 illustrates a system including a DP entity and a stateless NF and a service processing process using the same according to an embodiment of the disclosure.

Referring to FIG. 4, a system may include a consumer NF 410, a producer NF 420, and a DP entity 430. In the embodiment of FIG. 4, it is assumed that the consumer NF 410 and the producer NF 420 share the same DP entity 430. However, in various embodiments of disclosure, different NFs may use the same DP entity, and may use different DP entities.

In operation 410, the consumer NF 410 may transmit a service request message to the DP entity 430. The service request message may include information on a data processing type (which can be defined as a data processing type, and the name of the type is not limited thereto). The data processing type is information on a data processing operation to be performed by the DP entity, and may include at least one of retrieve, store, update, delete, and query.

In operation 402, the DP entity 430 performs a data processing operation based on the service request message. The DP entity 430 may perform, based on the data processing type in the service request message, at least one of the retrieve, store, update, delete, and query operations. For example, in case that the data processing type is retrieve, the DP entity 430 may perform an operation of including requested data in the service request message and transferring, to the producer NF 420, the service request message in which the added data is included by the DP entity 430 (operation 402).

In operation 403, the producer NF 420 may process the service request message received in operation 402, and transmit the service response message to the DP entity 430 in response thereto. The service response message may include information on the data processing type. For example, in case that the update is requested, the producer NF 420 may configure the data processing type with the update and transmit the service response message to the DP entity 430. In addition, the service response message may include data to be updated.

In operation 404, the DP entity 430 having received the service response message may perform an operation corresponding to the data processing type included in the service response message. For example, in case that the data processing type is update, data is updated in the storage of the DP entity 430. In addition, the DP entity 430 may transmit the service response message to the consumer NF 410.

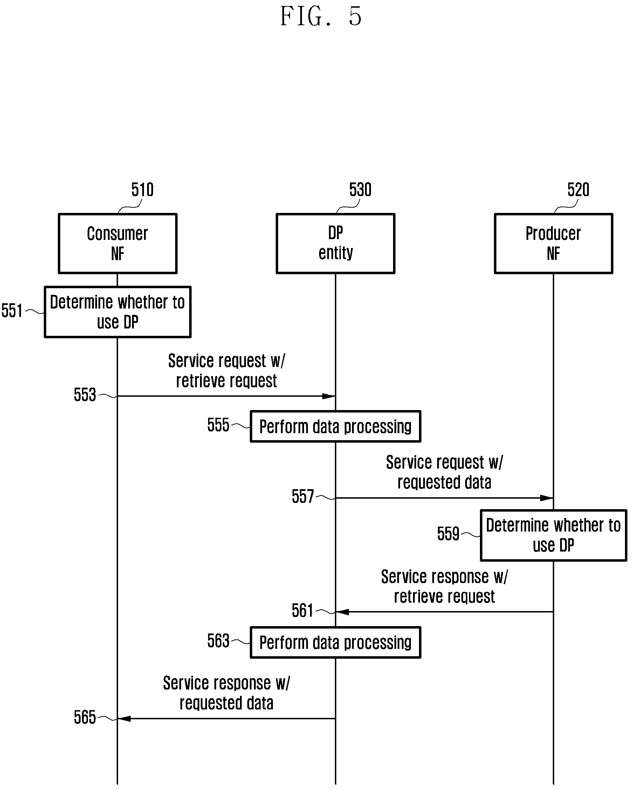

FIG. 5 illustrates a process of requesting data processing from a DP entity by a consumer NF and a producer NF of the disclosure.

Referring to FIG. 5, in operation 551, a consumer NF 510 may determine whether using a DP entity 530 is required. The consumer NF 510 may determine, through DP usage determination, whether DP usage is required for a service request for the producer NF 520. In addition, the consumer NF 510 may identify whether there is a DP entity which can be shared with the producer NF 520. In case that there is a DP entity which can be shared with the producer NF 520, he consumer NF 510 may use the DP entity which can be shared with respect to a service request and a service response between the consumer NF 510 and the producer NF 520. Operation 551 may be omitted. For example, whether to use the DP entity 530 may be already determined, or operation 551 may be omitted in a case of preconfiguration.

In case that it is determined that the DP entity 530 is used, the consumer NF 510 may transmit the service request message to the DP entity 530 in operation 553. The service request message may include information on the data processing type. The data processing type is information on a data processing operation to be performed by the DP entity, and may include at least one of retrieve, store, update, delete, and query. For example, in the embodiment of FIG. 5, the data processing type may be included or configured as retrieve.

In operation 555, the DP entity 530 may perform a data processing operation. The DP entity 530 may perform a data processing operation based on the data processing type. In FIG. 5, it is assumed that the retrieve is included in the service request message, and the DP entity 530 may perform a data processing operation corresponding to the retrieve. The DP entity 530 may search the storage for the requested data and add the requested data to the service request message. The data processing operation performed by the DP entity 530 may be different from according to whether the DP entity is an active DP or a passive DP. In a case of the active DP, the DP entity may actively perform data processing, and in a case of the passive DP, the DP entity may perform data processing only for the details requested from the NF. The active DP and the passive DP are described additionally below. In operation 557, the DP entity 530 may transmit a service request message to the requested data is added to the producer NF 520.

In operation 559, the producer NF 520 may determine whether to use the DP entity 530 is required. The producer NF 520 may determine whether DP usage for the service response for the consumer NF 510 is required through DP usage determination. Operation 559 may be omitted. For example, whether usage of the DP entity 530 is already determined or preconfigured, operation 559 operation may be omitted.

In case that the usage of the DP entity 530 is determined, the producer NF 520 may transmit the service response message to the DP entity 530 in operation 561. The service response message may include information on the data processing type. For example, in the embodiment of FIG. 5, the data processing type may be included or configured as retrieve.

In operation 563, the DP entity 530 may perform the data processing operation. The DP entity 530 may perform the data processing operation based on the data processing type included in the service response message. In FIG. 5, it is assumed that the retrieve is included in the service request message, the DP entity 530 may perform the data processing operation corresponding to the retrieve. The DP entity 530 may search the storage for the requested data and add the requested data to the service response message. In operation 565, the DP entity 530 may transmit the service response message to which the requested data is added to the consumer NF 510.

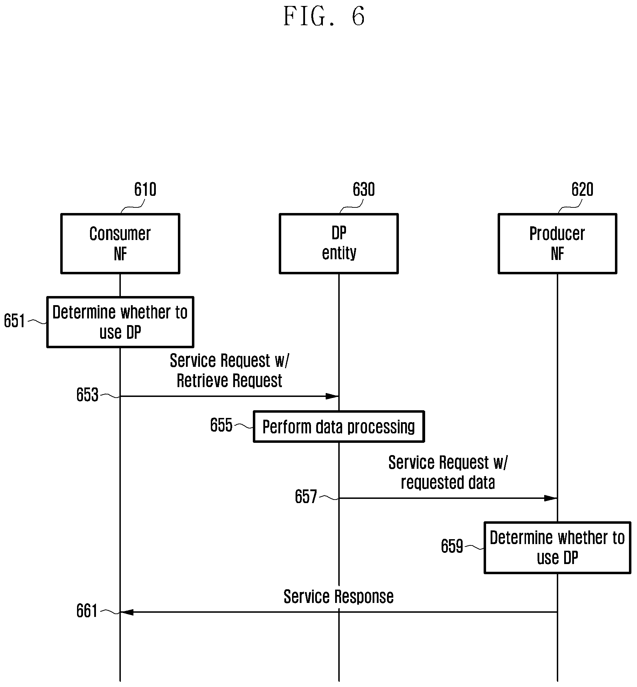

FIG. 6 illustrates a process in which a consumer NF requests data processing from a DP entity and a producer NF does not request data processing from the DP entity according to an embodiment of the disclosure.

Referring to FIG. 6, in operation 651, a consumer NF 610 may determine whether to use a DP entity 630 is required. A detailed operation refers to operation 551.

In case that the DP entity 630 is determined to be used, the consumer NF 610 may transmit a service request message to the DP entity 630 in operation 653. The service request message may include information on a data processing type. A detailed operation refers to operation 553.

In operation 655, the DP entity 630 may perform a data processing operation. The DP entity 630 may perform the data processing operation based on the data processing type. A detailed operation refers to operation 555. In operation 657, the DP entity 630 may transmit a service request message to which requested data is added to the producer NF 620.

In operation 659, the producer NF 620 may determine whether to the DP entity 630 is required. The producer NF 620 may determine, through DP usage determination, whether DP usage is required for a service response for the consumer NF 610. A detailed description refers to operation 559.

In case that the DP entity 630 is determined not to be used, the producer NF 610 may transmit, in operation 661, a service response message to the consumer NF 610. The service response message may be directly transmitted to the consumer NF 610 from the producer NF 620, and may be transmitted via the DP entity 630. In case that the service response message is transmitted through the DP entity 630, the DP entity 630 may perform the role of a proxy without performing additional data processing.

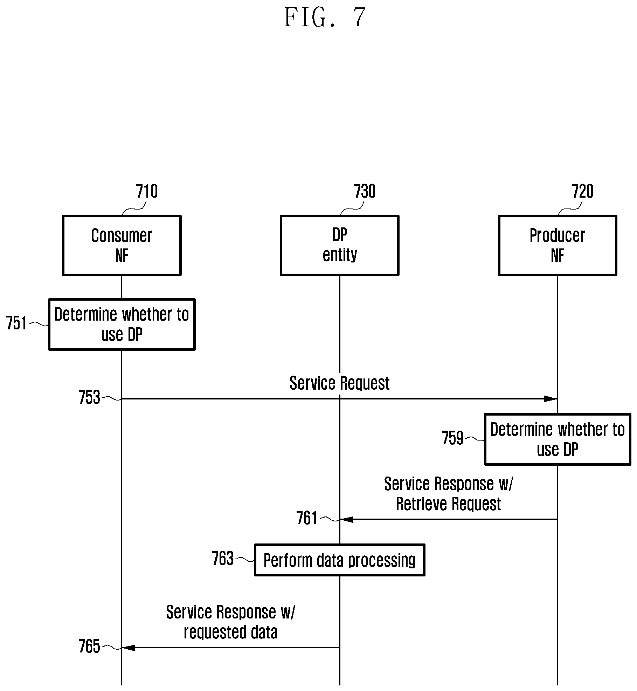

FIG. 7 illustrates a process in which a consumer NF does not request data processing from a DP entity and a producer NF requests data processing from the DP entity according to an embodiment of the disclosure.

Referring to FIG. 7, in operation 751, a consumer NF 710 may determine whether to use a DP entity 730 is required. A detailed operation refers to operation 551.

In case that the DP entity 730 is determined not to be used, the consumer NF 710 may transmit, in operation 753, a service request message to the producer NF 720. A service request message may be directly transmitted to the producer NF 720, and may be transmitted through the DP entity 730. When the service request message is transmitted through the DP entity 730, the DP entity 730 may perform the role of a proxy without performing additional data processing.

In operation 759, the producer NF 720 may determine whether to use the DP entity 730 is required. The producer NF 720 may determine, through DP usage determination, whether DP usage is required for a service response for the consumer NF 710. A detailed operation refers to operation 559.

In case that the DP entity 730 is determined to be used, the producer NF 720 may transmit a service response message to the DP entity 730 in operation 761. The service response message may include information on a data processing type.

In operation 763, the DP entity 730 may perform a data processing operation. The DP entity 730 may perform the data processing operation based on the data processing type included in the service response message. A detailed operation refers to operation 563. In operation 765, the DP entity 730 may transmit a service response message to which requested data is added to the consumer NF 710.

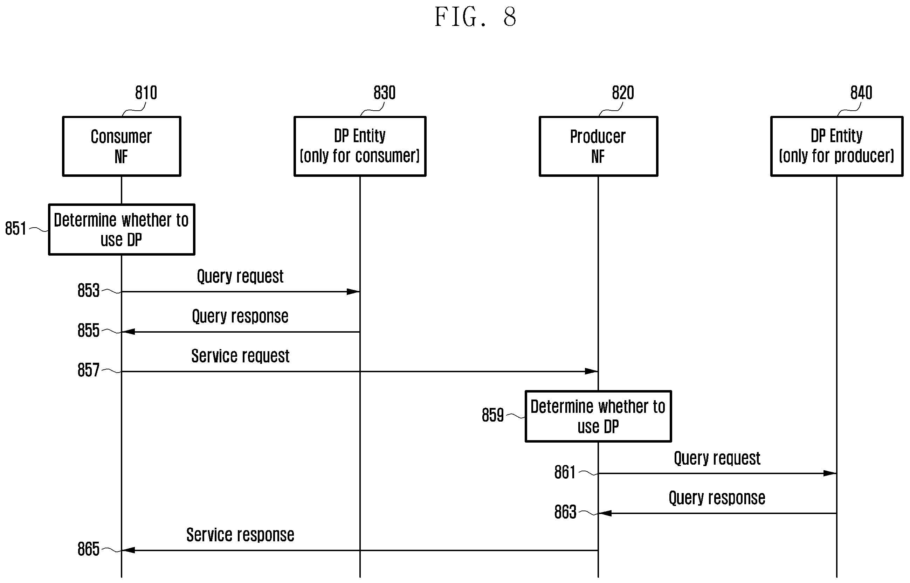

FIG. 8 illustrates a process in which a consumer NF and a producer NF use different DPs to request data processing according to an embodiment of the disclosure.

Referring to FIG. 8, in operation 851, a consumer NF 810 may determine whether to use a DP entity 830 is required. The consumer NF 810 may determine, through DP usage determination, whether DP usage is required for a service request for the producer NF 820. In addition, the consumer NF 810 may identify whether there is a DP entity which can be shared with the producer NF 820. In case that it is identified that there is no DP entity that the consumer NF 810 and the producer NF 820 can share, the DP entity 830 for the consumer NF 810 may be identified and the DP entity 830 can be used. Operation 851 may be omitted. For example, In case that whether the usage of the DP entity 830 is already determined or preconfigured, operation 851 may be omitted.

In operation 853, the consumer NF 810 may transmit a query request message to the DP entity 830. The query request message may be a message for requesting data required for the consumer NF 810 to transmit the service request message to the producer NF 820.

In operation 855, the consumer NF 810 may receive the query response message from the DP entity 830. The query response message may include data required through the query request message.

In operation 857, the consumer NF 810 may transmit the service request message to the producer NF 820. The service request message may be generated based on data obtained through the query response message. For example, the service request message may include information obtained through the query response message.

In operation 859, the producer NF 820 may determine whether the DP entity 840 is used. The producer NF 820 may determine, through DP usage determination, whether DP usage is required for a service response for the consumer NF 820. In addition, the producer NF 820 may identify whether there is a DP entity which can be shared with the consumer NF 810. In case that it is identified that there is no DP entity that the consumer NF 810 and the producer NF 820 can share, the DP entity 840 for the producer NF 820 may be identified and the DP entity 840 can be used. Operation 859 may be omitted. For example, in case that whether the usage of the DP entity 830 is already determined or preconfigured, operation 859 may be omitted.

In operation 861, the producer NF 820 may transmit a query request message to the DP entity 840. The query request message may be a message for requesting data required for the producer NF 820 to transmit a service response message to the consumer NF 810.

In operation 863, the producer NF 820 may receive a query response message from the DP entity 840. The query response message may include data requested through the query request message.

In operation 865, the producer NF 820 may transmit the service response message to the consumer NF 810. The service response message may be generated based on data obtained through the query response message. For example, the service response message may include information obtained through the query response message.

In the description above, FIGS. 4 to 8 are merely embodiments classified for convenience of description, and it should be noted that some configurations can be combined and implemented within a scope that does not contradict the disclosure.

Hereinafter, additional configurations which can be commonly applied to various embodiments of the disclosure are described.

### - Concept of source, target, and DP message

In various embodiments of the disclosure, a service request message and a service response message are defined between a consumer NF and a producer NF, and a service request message and a service response message received by a DP entity may be referred to as a DP request message, and a service request message and a service response message transmitted by the DP entity may be defined as a DP response message. In addition, in various embodiments of the disclosure, an NF transmitting a message to the DP entity may be defined as a source NF, and an NF receiving a message from the DP entity may be defined as a target NF.

### - Concept of DP entity discovery

In various embodiments of the disclosure DP entity discovery may be applied. The DP entity can require the largest gain compared to the existing technology in case that a source NF and a target NF of a service message share the same DP entity. To this end, a process (DP entity discovery) enabling NFs to recognize an NF, the data of which is stored in the DP entity is required. When generating a DP entity, if a procedure of performing registration in a network repository function (NRF) by including currently supported NF information in a DP entity profile is performed, the NF may discover an appropriate DP entity through the NRF. In addition, it is also possible that information of the DP entity to be used is pre-configured for each NF. For example, in case that a business operator installs a DP entity and an NF, it may be possible to pre-configure a relationship between the DP entity and the NF. In case that a DP entity to be used by the corresponding NF is determined, the NF may store its own data in the corresponding DP entity. The DP entity may update its profile to the NRF and notify other NFs supported by the DP entity of information of a new NF. Through this process, the NF may identify whether there is a DP entity that supports the NF or that can be used by the NF, whether there is a DP entity which can be shared with another NF, etc.

### - Concept of active DP and passive DP

In various embodiments of the disclosure, the DP entity may be classified into a passive DP and an active DP according to whether an entity determining whether a data-related operation is required is an NF or a DP entity. A scheme in which in case that the NF transmits a service message to the DP entity, the DP entity identifies a target NF type, a service name, and the like from the corresponding service message to determine data required for the corresponding message, then add the required information, and transmit the same to the target NF is defined as an active DP. That is, the active DP may actively perform data processing for processing the service message in case that receiving the service message. Conversely, a scheme in which the NF determines whether a DP is required for the corresponding service message, designates the type of required data, and transmits the service message to the DP entity and the DP entity passively performs only a specific operation for requested data is defined as a passive DP.

### - Service message

In various embodiments of the disclosure, before the source NF transmits the service message to the target NF, the source NF may perform a procedure of determining whether there is data to be included in the corresponding service message and determining whether a DP function needs to be used. In case that the DP is determined to be required, the source NF includes at least one piece of information among the required data processing type and the required data types in addition to a target NF address and a service name in the corresponding service message and transmits the same to the DP entity. The DP entity may identify the data processing type and the data type from the received service message and perform requested processing, and then may transmit the service message to the target NF. In a case of the passive DP entity, through the method above, clearer information for data processing can be transferred.

### - Processing of service message according to degree of freedom

The DP entity having received the service message may process the service message according to the degree of freedom. In the case of the passive DP, the degree of freedom is low, and thus only requested data processing can be performed. On the other hand, in the case of the active DP, the DP entity has a higher degree of freedom and modify or update the service message. Accordingly, in the case of the active DP, there is no limitation to the area in which the DP entity can be utilized in the service message. The active DP entity may access the entire service message and may perform modification such as adding data to both the header and the body. The active DP may access both the header and the body and modify the message, and thus in case that there is data required to process the service message, an operation of adding the data to the service message and modifying or updating the same may be performed. In the case of the passive DP, the DP entity performs only a designated operation for data designated by the NF, and thus the DP entity cannot access the body of the service message designated by the NF and performs an operation of adding data by utilizing only the header, etc.

In the case of the passive DP, new HTTP custom headers below may be defined to support the operation of the DP. In addition, the concept below is also appliable to the active DP. That is, below information is also applicable to the active DP, and the active DP performs the requested operation by default, but may actively perform an additional data processing operation.

### -3gpp-Sbi-DP-ProcessingType

▪Header having, as value, type of data processing requested from DP by NF
▪Value examples: Retrieve, Query, Store, Update, and Delete
▪3gpp-Sbi-DP-UEID
▪Identifier for distinguishing UE to which data corresponds
▪Value examples: SUPI(subscription permanent identifier), 5G-GUTI(global unique temporary identifier), etc.

### -3gpp-Sbi-DP-DataName

▪Header having, as value, name of data corresponding to processing target of DP
▪Possible to include data in various units such as data set, data subset, and individual data
▪Value examples: ueContext, policyData, pdusessionId, etc.

### -3gpp-Sbi-DP-DataID

▪Possible to integrate 3gpp-Sbi-DP-UEID and 3gpp-Sbi-DP-DataName represent same as one header
▪Value example: {SUPI, ueContext}

### -3gpp-Sbi-DP-Data-*

▪Header having, as value, data to be stored in DP by NF, or to be transmitted to NF by DP
▪Use, for header name, same string as string included in 3gpp-Sbi-DP-DataName header. 3gpp-Sbi-DP-Data-<DataName value>
▪Include data corresponding to header name as value
▪Header examples
   > 3gpp-Sbi-DP-Data-ueContext
   > 3gpp-Sbi-DP-Data-subscriptionData

The DP entity may identify a processing type, a UE, and data and perform an operation corresponding thereto by using the structure above.

Hereinafter, a specific example of processing a service message, which is applicable to various embodiments of the disclosure, is described.

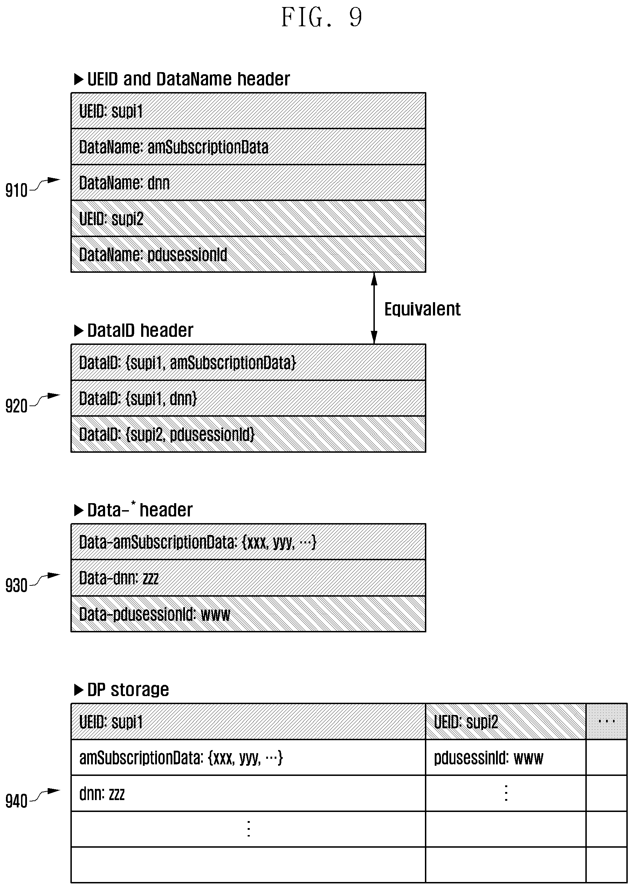

FIG. 9 illustrates a header of a service message transmitted by an NF and DP storage applicable to various embodiments of the disclosure.

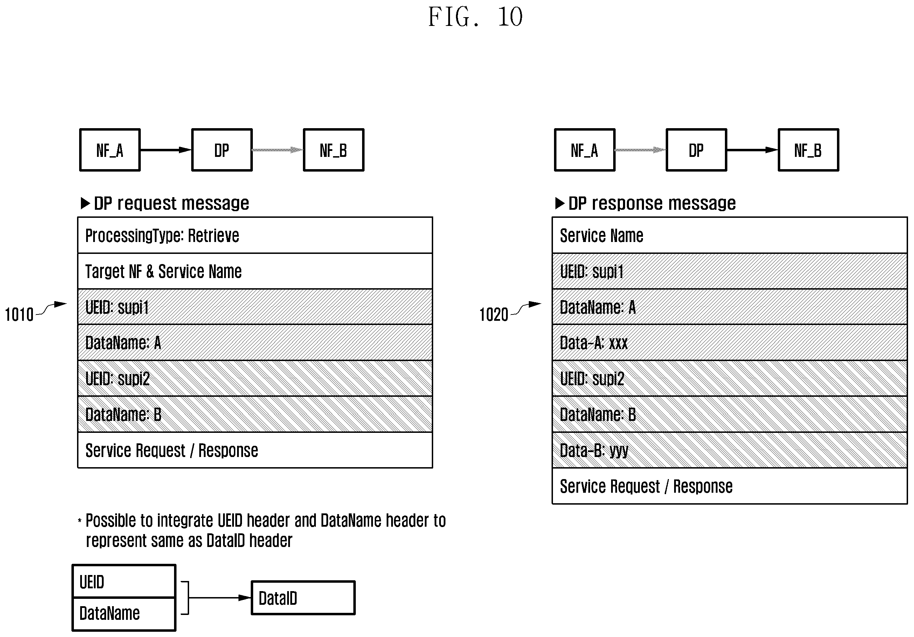

Numerical number 910 indicates a header including a UE ID and a data name. This refers to 3gpp-Sbi-DP-UEID and 3gpp-Sbi-DP-DataName described above. The same interpretation is applied to FIGS. 10 to 13.

Numerical number 920 indicates a dataID header including dataID. This refers to the description of 3gpp-Sbi-DP-DataID above. The same interpretation is applied to FIGS. 10 to 13.

Numerical number 930 indicates a Data-* header. This refers to the description of 3gpp-Sbi-DP-Data-* above. The same interpretation is applied to FIGS. 10 to 13.

In case that a service message including the header as in numerical numbers 910, 920, and 930 is received, data processing as in numerical number 940 may be performed in a DP storage. The DP entity may process data requested by an NF for each UE classified by a UE identifier (e.g., SUPI). For example, numerical number 940 indicates that the DP entity performs a storage function based on a data processing type. The DP entity may store data stored for each UE in the storage.

FIG. 10 illustrates a header of a service message transmitted by an NF and DP retrieve applicable to various embodiments of the disclosure.

Numerical number 1010 indicates a DP request message. The DP request message corresponds to a service message received from the NF by the DP entity. The service message may be a service request message received by the DP entity or may be a service response message. The DP request message may include fields for a processing type, a target NF, a UE ID, and a data name.

The DP entity having received the DP request message may perform the data processing operation to generate a DP response message as in numerical number 1020. A DP response message corresponds to a service message transmitted to the NF by the DP entity. The service message may be a request message transmitted by the DP entity, and a service response message. The data processing type of numerical number 1010 is retrieve, and thus the DP entity may perform an operation of retrieving requested data, adding the same to the service message, and transferring the service message to a target NF. The DP entity may retrieve data corresponding to a UE ID and a data name and add the retrieved data to a Data- field. The DP entity may transfer a DP response message to which the data is added to the target NF. For example, the DP entity may retrieve data A of a UE corresponding to SUPI 1 and add data (xxx) corresponding to data A to the service message. In addition, the DP entity may retrieve data B of a UE corresponding to SUPI 2 and add data (yyy) corresponding to data B to the service message.

Accordingly, the DP entity may perform a data processing operation corresponding to a DP request message required by a source NF and may transmit a DP response message obtained by applying data processing to the target NF.

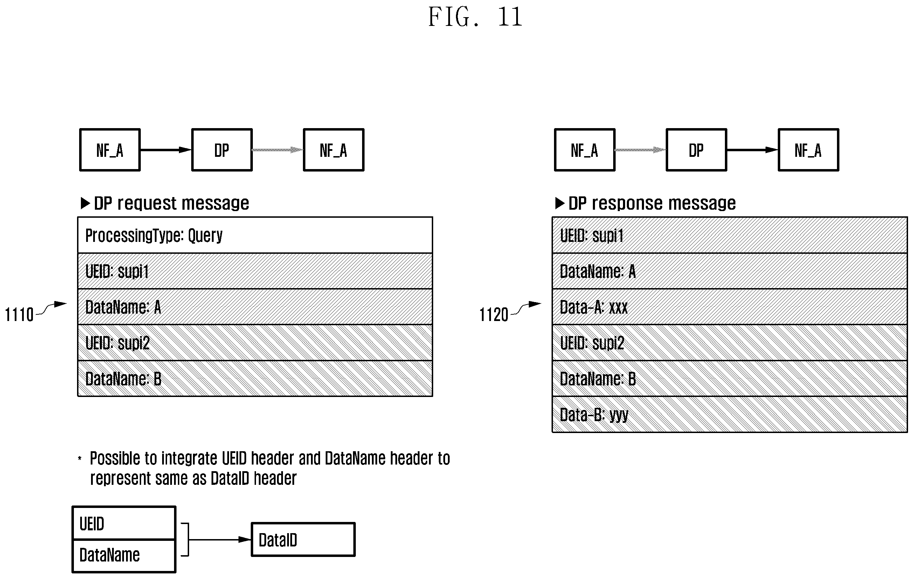

FIG. 11 illustrates a header of a service message transmitted by an NF and a DP query applicable to various embodiments of the disclosure.

Numerical number 1110 indicates a DP request message. The DP request message corresponds to a service message received from an NF by a DP entity. The service message may be a service request message received by the DP entity, and a service response message. The DP request message may include fields for a processing type, a target NF, a UE ID, and a data name. FIG. 11 illustrates a case where the data processing type is query. In case that the data processing type is query, the DP entity retrieves requested data and transfers the retrieved data to the NF having transmitted the DP request message. For example, it may be assumed that NF_A has transmitted, to the DP entity, a DP request message for requesting data A of a UE corresponding to SUPI 1 and data B of a UE corresponding to SUPI 2.

The DP entity having received the DP request message may perform a data processing operation to generate a DP response message as in numerical number 1120. The DP response message corresponds to a service message transmitted to the NF by the DP entity. The service message may be a request message transmitted by the DP entity and a service response message. The DP entity may retrieve requested data, add the retrieved data to a DP response message as in 1120, and transmit, to NF_A, the DP response message to which the requested data is added. The DP entity may retrieve data corresponding to a UE ID and a data name, add the retrieved data to a data- field, and transfer a data response message to which the retrieved data is added to a target NF. For example, referring to the DP response message, it can be identified that data A (xxx) has added for the UE corresponding to SUPI 1 and data B (yyy) has been added for the UE corresponding to SUPI 2.

Through the method above, the NF may obtain required data from the DP entity.

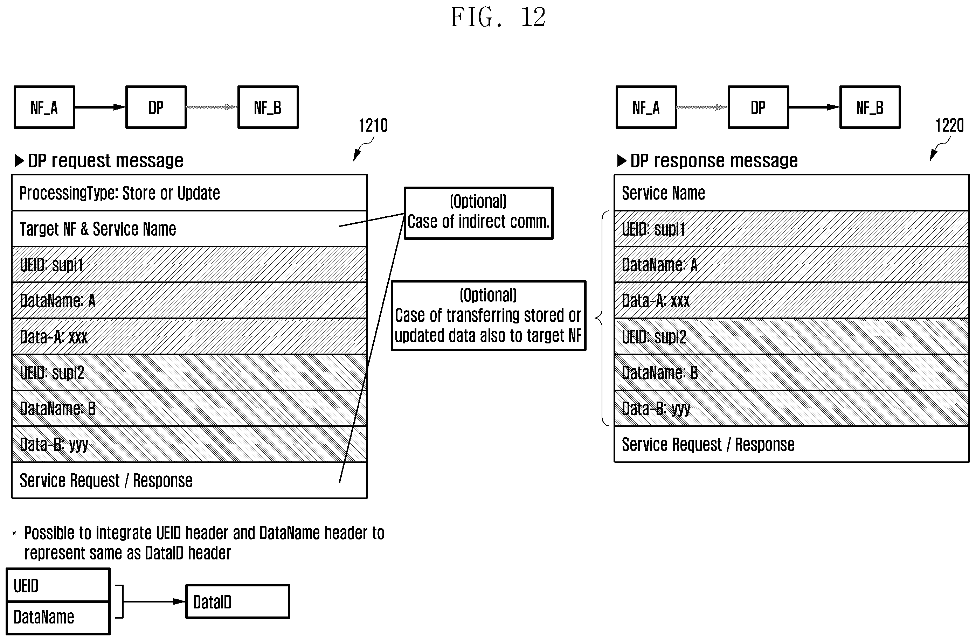

FIG. 12 illustrates a header of a service message transmitted by an NF and DP store and update applicable to various embodiments of the disclosure.

Numerical number 1210 indicates a DP request message. The DP request message corresponds to a service message received from an NF by a DP entity. The service message may be a service request message received by the DP entity, and may be a service response message. The DP request message may include fields for a processing type, a target NF, a UE ID, and a data name. In FIG. 12, a case where the data processing type is update or store.

The NF may indicate, through the DP request message, data to be stored or updated in the DP entity. For example, for data name A of a UE corresponding to SUPI 1, the NF may indicate to update or store data (xxx), and for data name B of a UE corresponding to SUPI 2, the NF may indicate to update or store data (yyy). Information on the target NF may be optionally included. In case that the data needs to be not only updated or stored in the DP entity but also transferred to the target NF, information on the target NF and the service may be further included. The DP entity having received the DP request message may perform the indicated data processing operation.

In a case of store, the DP entity may identify or generate data corresponding to the UE ID and the data name and store information corresponding to data-. In addition, for a source NF, a data storage result may be reported. In a case of update, the DP entity may retrieve data corresponding to the UE ID and the data name, update the retrieved data, and store the updated data. In addition, for the source NF, a result of the data updating may be reported.

In case that transferring to the target NF is required, as in numerical number 1220, a DP response message may be generated and transmitted to the target NF. The DP response message may include information on the UE ID, data name, and data received through the DP request message. The DP response message corresponds to a service message transmitted to the NF by the DP entity. The service message may be a request message transmitted by the DP entity, or may be a service response message.

Through the method above, the NF may store or update required data in the DP entity, and may simultaneously transfer the same to the target NF.

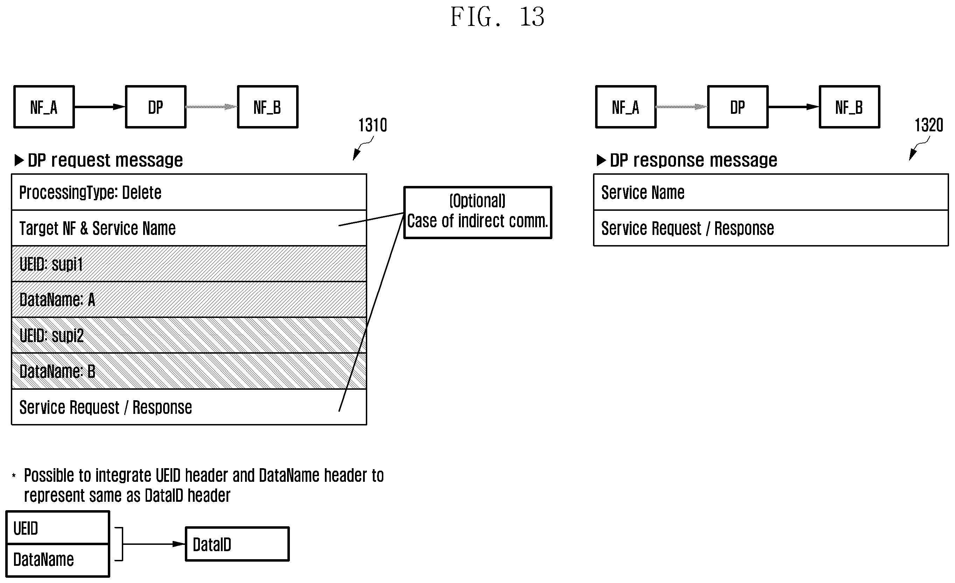

FIG. 13 illustrates a header of a service message transmitted by an NF and DP delete applicable to various embodiments of the disclosure.

Numerical number 1310 indicates a DP request message. The DP request message corresponds to a service message received from an NF by a DP entity. The service message may be a service request message received by the DP entity, and may be a service response message. The DP request message may include fields for a processing type, a target NF, a UE ID, and a data name. In FIG. 13, a case where a data processing type is delete is described.

The NF may indicate delete to the DP entity through a DP request message. For example, the NF may indicate or request to delete data corresponding to data name A of a UE corresponding to SUPI 1 and delete data corresponding to data name B of a UE corresponding to SUPI 2. Information on the target NF may be optionally included in the DP request message. In case that the information needs to be not only deleted from the DP entity but also transferred to the target NF, information on the target NF and the service may be further included. The DP entity having received the DP request message may perform the indicated data processing operation.

The DP entity may retrieve data corresponding to a UE ID and a data name, and delete the same. In addition, if necessary, a result of the data deletion may be reported to the source NF.

In case that the information needs to be transferred to the target NF, the DP response message may be generated and transferred to the target NF as in numerical number 1320. The DP response message corresponds to a service message transmitted to the NF by the DP entity. The service message may be a request message transmitted by the DP entity, and may be a service response message.

Through the method above, the NF may delete data from the DP entity, and may simultaneously transfer a service message to the target NF.

Through FIGS. 9 to 13, data processing according to the header and the service type is described, but is classified for convenience of description, and the header may be implemented in various methods. For example, some details of FIGS. 9 to 13 may be combined and implemented. For example, in case that the operation of retrieve of FIG. 10 and the operation of delete of FIG. 13 are performed together, it may be also considered that a header is configured to include both information for retrieve and information for delete, and the configured DP request message is used.

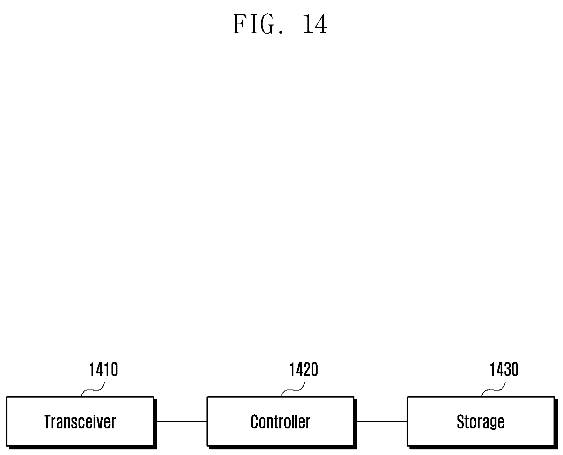

FIG. 14 illustrates a structure of a network entity performing a network function according to an embodiment of the disclosure.

A network entity of FIG. 14 may be one of the RAN, AMF, SMF, IPF, PCF, UDM, NSSF, NWDAF, DN, NSACF, and DP entity described through embodiments of the disclosure.

Referring to FIG. 14, the network entity performing the network function may include a transceiver 1410, a controller 1420, and a storage 1430. The controller in the disclosure may be defined as a circuit, an application-specific integrated circuit, or at least one processor.

The transceiver 1410 may transmit or receive a signal to or from another network entity. For example, the transceiver 1410 may transmit or receive a signal or a message to or from an AMF corresponding to a network entity managing access and mobility to an access network of a UE.

The controller 1420 may control the overall operation of a network entity performing a network function according to embodiments proposed in the disclosure. For example, the controller 1420 may control a signal flow between respective blocks to perform the operation according to a flowchart described above.

The storage 1430 may store at least one of information transmitted or received through the transceiver 1410 and information generated through the controller 1420.

Methods disclosed in the claims and/or methods according to the embodiments described in the specification of the disclosure may be implemented by hardware, software, or a combination of hardware and software.

In case that the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. Also, the above respective embodiments may be employed in combination, as necessary. For example, the methods proposed in the disclosure may be partially combined with each other to operate a network entity and a terminal. Moreover, although the above embodiments have been described based on the FDD LTE system, other variants based on the technical idea of the embodiments may also be implemented in other communication systems such as TDD LTE, and 5G, or NR systems.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented.

## Claims

1. A method performed by a first network function (NF), the method comprising:
determining a data proxy (DP) entity for a service with a second NF;
generating a service message not including a part of data for the service; and
transmitting the service message to the DP entity,
wherein the part of data for the service is processed by the DP entity and is transferred to the second NF.

2. The method of claim 1,
wherein the service message includes a data processing type, a terminal identifier for data processing, a data name, and information on the second NF.

3. The method of claim 2,
wherein data is identified, based on the terminal identifier and the data name, by the DP entity, and
wherein a service message including the data is transmitted, based on the data processing type, from the DP entity to the second NF.

4. The method of claim 1,
wherein a DP discovery operation is performed for a network repository function (NRF) to identify a DP supporting the first NF.

5. A method performed by a data proxy (DP) entity, the method comprising:
receiving, from a first network function (NF), a service message not including a part of data for a service for a second NF;
processing, based on a data processing type included in the service message, the part of data for the second NF; and
transmitting a service message including the part of data to the second NF.

6. The method of claim 5,
wherein the service message includes the data processing type, a terminal identifier for data processing, a data name, and information on the second NF.

7. The method of claim 6, comprising:
identifying, based on the terminal identifier and the data name, the part of data,
wherein the service message is transmitted, based on the data processing type and the information on the second NF, from the DP entity to the second NF.

8. The method of claim 5,
wherein in case that the DP entity is an active DP, access to information on a header and a body of a service message received from the first NF is performed, and
wherein in case that the DP entity is a passive DP, access only to the header of the service message received from the first NF is performed.

9. A first network function (NF) comprising:
a transceiver; and
a controller,
wherein the controller is configured to:
determine a data proxy (DP) entity for a service with a second NF;
generate a service message not including a part of data for the service; and
transmit the service message to the DP entity, and
wherein the part of data for the service is processed by the DP entity and transferred to the second NF.

10. The first NF of claim 9,
wherein the service message includes a data processing type, a terminal identifier for data processing, a data name, and information on the second NF.

11. The first NF of claim 10,
wherein data is identified by the DP entity, based on the terminal identifier and the data name, and
wherein a service message including the data is transmitted from the DP entity to the second NF, based on the data processing type.

12. The first NF of claim 9,
wherein a DP discovery operation is performed for a network repository function (NRF) to identify a DP supporting the first NF.

13. A data proxy (DP) entity comprising:
a transceiver; and
a controller,
wherein the controller is configured to:
receive, from a first network function (NF), a service message not including a part of data for a service for a second NF;
process, based on a data processing type included in the service message, the part of data for the second NF; and
transmit a service message including the part of data to the second NF.

14. The DP entity of claim 13,
wherein the service message includes the data processing type, a terminal identifier for data processing, a data name, and information on the second NF.

15. The DP entity of claim 14,
wherein the controller is configured to control the part of data to be identified based on the terminal identifier and the data name, and
wherein the service message is transmitted from the DP entity to the second NF, based on the data processing type and the information on the second NF.
